(19) Europäisches Patentamt / European Patent Office / Office européen des brevets

(11) **EP 4 328 075 B1**

(12) **EUROPÄISCHE PATENTSCHRIFT**

(45) Veröffentlichungstag und Bekanntmachung des Hinweises auf die Patenterteilung:
**01.07.2026 Patentblatt 2026/27**

(21) Anmeldenummer: **22191416.1**

(22) Anmeldetag: **22.08.2022**

(51) Internationale Patentklassifikation (IPC):
**B60L 50/75** *(2019.01)* **B60L 58/13** *(2019.01)*
**B60L 58/30** *(2019.01)* **B60L 15/20** *(2006.01)*

(52) Gemeinsame Patentklassifikation (CPC):
**B60L 50/75; B60L 15/2045; B60L 58/13; B60L 58/30;** B60L 2200/26; B60L 2260/54

(54) **VERFAHREN ZUR OPTIMIERUNG DER FAHRSTRATEGIE EINES SCHIENENFAHRZEUGES, DATENVERARBEITUNGSVORRICHTUNG, COMPUTERPROGRAMMPRODUKT, COMPUTERLESBARES MEDIUM SOWIE SCHIENENFAHRZEUG MIT EINER ENERGIESPEICHERVORRICHTUNG, EINER ENERGIEERZEUGUNGSVORRICHTUNG UND EINER DATENVERARBEITUNGSVORRICHTUNG**

METHOD FOR OPTIMIZING A DRIVING STRATEGY OF A RAIL VEHICLE, DATA PROCESSING DEVICE, COMPUTER PROGRAMME PRODUCT, COMPUTER-READABLE MEDIUM AND RAIL VEHICLE WITH AN ENERGY STORAGE DEVICE, AN ENERGY GENERATION DEVICE AND A DATA PROCESSING DEVICE

PROCÉDÉ D'OPTIMISATION DE STRATÉGIE DE CONDUITE D'UN VÉHICULE FERROVIAIRE, DISPOSITIF DE TRAITEMENT DE DONNÉES, PRODUIT PROGRAMME INFORMATIQUE, SUPPORT LISIBLE PAR ORDINATEUR ET VÉHICULE FERROVIAIRE COMPRENANT UN DISPOSITIF DE STOCKAGE D'ÉNERGIE ET UN DISPOSITIF DE TRAITEMENT DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.02.2024 Patentblatt 2024/09**

(73) Patentinhaber: **Stadler Rail AG
9565 Bussnang (CH)**

(72) Erfinder: **Buchner, Andreas
78462 Konstanz (DE)**

(74) Vertreter: **Hepp Wenger Ryffel AG
Friedtalweg 5
9500 Wil (CH)**

(56) Entgegenhaltungen:
**DE-A1- 10 145 514    DE-A1- 102017 213 088**

• **FAROOQI HAFSA ET AL: "Shrinking horizon parametrized predictive control with application to energy-efficient train operation", AUTOMATICA, PERGAMON, AMSTERDAM, NL, vol. 112, 26 October 2019 (2019-10-26), XP085966277, ISSN: 0005-1098, [retrieved on 20191026], DOI: 10.1016/ J.AUTOMATICA.2019.108635**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Optimierung der Fahrstrategie eines Schienenfahrzeuges, eine Datenverarbeitungsvorrichtung, ein Computerprogrammprodukt, ein computerlesbares Medium sowie ein Schienenfahrzeug mit einer Energiespeichervorrichtung, einer Energieerzeugungsvorrichtung und einer Datenverarbeitungsvorrichtung.

Im Allgemeinen werden Energieerzeugungsvorrichtungen, wie Verbrennungsmotoren, für Fahrzeuge auf bestimmte Ziele optimiert. Die Energieerzeugungsvorrichtungen arbeiten dann üblicherweise nur in bestimmten Betriebspunkten oder relativ engen Betriebsbereichen optimal. Ausserhalb dieser Bereiche kann beispielsweise ein erhöhter Kraftstoffverbrauch oder eine geringere Lebensdauer der Energieerzeugungsvorrichtung entstehen. Es ist daher das Ziel solche Energieerzeugungsvorrichtungen in einem optimalen oder möglichst vorteilhaften Betriebsbereich zu betreiben.

In Fahrzeugen mit hybriden Antriebssträngen, also einem Antriebsstrang umfassend eine Energiespeichervorrichtung sowie eine Energieerzeugungsvorrichtung gibt es folglich einen Freiheitsgrad. Der Freiheitsgrad ist die Wahl der Leistungsaufteilung zwischen den beiden Teilen des Antriebsstranges. Es handelt sich somit um ein Optimierungsproblem. Die optimale Leistungsaufteilung ist dabei nicht statisch, sondern abhängig von den spezifischen Eigenschaften von der Energieerzeugungsvorrichtung und der Energiespeichervorrichtung.

Der Einsatz einer Brennstoffzelle als Energieerzeugungsvorrichtung weist in einem mittleren Lastbereich den höchsten Wirkungsgrad und damit die höchste Energieeffizienz auf. Sehr niedrige und sehr hohe Lasten haben negativen Einfluss auf die Lebensdauer der Brennstoffzelle. Weiterhin ist es ungünstig, den Betriebspunkt oft zu wechseln.

Eine Energiespeichervorrichtung wie beispielsweise eine elektrische Batterie wird weiterhin bevorzugt in einem relativ engen Bereich ihrer Speicherkapazität betrieben, um vorzeitiges Altern zu vermeiden.

Es existieren daher Methoden zur Erzielung einer global optimalen Lösung für eine bestimmte Fahrstrecke. WO 2022/008413 offenbart beispielsweise ein Verfahren zum Betreiben eines elektrischen Antriebssystem, bei dem ein Fahrzeug über eine Brennstoffzelle und einen Energiespeicher verfügt. Die Planung der Energieversorgung für eine zurückzuliegende Gesamtstrecke erfolgt so, dass basierend auf einem festgelegten Leistungsniveau der Brennstoffzelle ermittelt wird, ob die nötige Zusatzleistung der Batterie zu unerwünschten Betriebszuständen der Batterie führt. Wo dies der Fall ist, wird das Leistungsniveau der Brennstoffzelle entsprechend angepasst. Die Berechnung für die gesamte Strecke wird dann wiederholt und so wird iterativ die Strategie der Energieversorgung des Fahrzeuges auf der gesamten Strecke ermittelt. Nachteilig ist der entstehende hohe Berechnungsaufwand durch die vielen Iterationen sowie die Gefahr, dass der Algorithmus bei ungünstigen Strecken oder Verkehrsverhältnissen nur sehr kleine Abschnitte konstanter Brennstoffzellenleistung ermittelt. Weiterhin wird bei einer global optimalen Lösung nicht berücksichtigt wie äussere Einflüsse wie Betriebslage, Fahrverhalten des Lockführers, Fahrwiederstände, Sonneneinstrahlung und andere nicht vorhersehbare Effekte sich auf die Fahrstrategie auswirken.

DE 101 45 514 A1 offenbart ein Verfahren zum Betreiben eines Fahrzeuges mit einer Energiequelle, die ein Gleichspannungszwischenkreis speist, der mit einem Elektromotor verbunden ist.

Es ist daher Aufgabe der vorliegenden Erfindung, die Nachteile des Standes der Technik zu vermeiden und insbesondere ein Verfahren anzugeben, das mit geringem Aufwand eine optimierte Fahrstrategie für das Fahrzeug ermitteln kann.

Die Aufgabe wird durch ein Verfahren, eine Datenverarbeitungsvorrichtung, ein Computerprogrammprodukt, ein computerlesbares Medium sowie ein Schienenfahrzeug gemäss der unabhängigen Ansprüche gelöst.

Es ist somit möglich, eine Vorauswahl einer überschaubaren Anzahl möglichst guter Lösungen zu finden, unter denen sich eine oder mehrere Lösungen der Güte grösser 95% befinden.

Die Zielkriterien der Optimierung sind dabei Effizienz und Lebensdauer der Energiesysteme. Für den Fall einer Brennstoffzelle als Energieerzeugungsvorrichtung ist der Betrieb der Brennstoffzelle im mittleren Lastbereich optimal sowohl für Lebensdauer als auch für Effizienz. Für eine Batterie als Energiespeichervorrichtung ist der Betrieb in einen möglichst kleinen Betriebsbereich zentriert bei einem Ladestand (SOC, State Of Charge) von 50% optimal für die Lebensdauer.

Die Brennstoffzelle kann hierbei mit einem beliebigen Brennstoff betrieben werden, bevorzugt ist Wasserstoff oder ein anderes wasserstoffhaltiges Gas wie beispielsweise Erdgas.

Der Zielkonflikt ist daher, dass ein konstanter Betrieb der Brennstoffzelle zu einem maximalen Ladestandbetriebsbereich der Energiespeichervorrichtung führt und ein minimaler Ladestandbetriebsbereich der Energiespeichervorrichtung zu einer maximalen Volatilität der Brennstoffzellenleistung führt.

Die anspruchsgemässe Lösung führt zu einer Möglichkeit diesen Zielkonflikt aufzulösen.

Der Energiebedarf eines Horizontes kann durch Simulation und/oder Messungen mit dem Fahrzeug auf der Betriebsstrecke bestimmt werden.

Das Verfahren ist selbstverständlich in Schienenfahrzeugen anwendbar. Es ist weiterhin auch eine Anwendung in Linienbussen, Bussen, Lastwagen oder auch Personenkraftwagen denkbar. Vorteilhafterweise ist die Gesamtstrecke jedoch vorgängig bekannt, so dass das Verfahren optimal angewendet werden kann.

Die Energieerzeugungsvorrichtung ist bevorzugt eine Brennstoffzelle. Gegenüber einem Verbrennungsmotor hat diese einen besseren Wirkungsgrad.

Der optimale Bereich des Ladezustandes ist im Wesentlichen 30% bis 70% der Maximalladung der Energiespeichervorrichtung, insbesondere im Wesentlichen 40% bis 60% der Maximalladung der Energiespeichervorrichtung.

In einem solchen Bereich ist die Lebensdauer der Energiespeichervorrichtung optimal.

Ein Streckenabschnitt ist eine Untermenge einer zu fahrenden Gesamtstrecke. Beispielsweise kann ein Streckenabschnitt von Haltestelle zu Haltestelle reichen. Alternativ können Streckenabschnitte auch von signifikanten Streckenpunkten zu anderen signifikanten Streckenpunkten führen, bei denen sich beispielsweise der Leistungsbedarf der Traktion signifikant ändert wie bei einer Änderung der erlaubten Höchstgeschwindigkeit, dem Beginn oder dem Ende einer Steigung, dem Beginn oder dem Ende eines Gefälles oder eines Tunnelabschnittes.

Ein Horizont ist eine Untermenge zusammenhängender Streckenabschnitte oder eines Streckenabschnitts, bei dem die Energieabgaberate der Energieerzeugungsvorrichtung, also beispielsweise der Betriebspunkt der Brennstoffzelle, im Wesentlichen konstant gehalten wird. Die Minimalanzahl der Horizonte ist somit eins, in diesem Fall ist der Betrieb der Energieerzeugungsvorrichtung über die gesamte zu fahrende Strecke konstant. Die Maximalanzahl der Horizonte entspricht dem Fall, dass die Anzahl der Horizonte gleich der Anzahl der Streckenabschnitte ist. Somit ist der konstante Betrieb der Energiequelle während der Fahrt nur in einem einzelnen Streckenabschnitt jeweils konstant.

Es werden somit Horizontvarianten gebildet die eine Minimalanzahl, eine Maximalanzahl und mindestens eine Zwischenanzahl umfasst, wobei die Minimalanzahl der Horizonte eins ist, die Maximalanzahl der Horizonte der Anzahl der Streckenabschnitte entspricht und die Zwischenanzahl zwischen Minimal- und Maximalanzahl liegt, die Zwischenanzahl entspricht der Anzahl der Streckenabschnitte minus zwei.

Bei n vorhandenen Streckenabschnitten können insgesamt n Horizontvarianten gebildet werden. Zunächst die Minimalanzahl und Maximalanzahl der Horizonte und dann n minus zwei Zwischenanzahlen der Horizonte, bei denen ausgehend von eins die Anzahl gebildeter Horizonte jeweils um eins erhöht wird. Dabei wird die Anzahl Streckenabschnitte durch die Anzahl gewünschter Horizonte dividiert und gerundet, das Ergebnis ist die Anzahl Streckenabschnitte pro Horizont, der Rest wird den letzten Horizonten zugewiesen, derart, dass sie maximal um einen Streckenabschnitt länger oder kürzer sind als die vorderen Horizonte.

Es kann ein anteiliger Gesamtenergiebedarf der zu fahrenden Strecke für jeden Horizont bestimmt werden.

Durch diese Bestimmung wird ein Vergleichswert für den Horizont erstellt.

Der anteilige Gesamtenergiebedarf der zu fahrenden Strecke für jeden Horizont kann durch Aufteilung des Gesamtenergiebedarfes der Gesamtstrecke auf die Horizonte bestimmt werden. Die Verteilung kann durch den zeitlichen Anteil des Horizontes und der Gesamtfahrzeit der Gesamtstrecke festgelegt werden. Umfasst ein Horizont also beispielsweise 25% der Fahrzeit wird ihm ein anteiliger Gesamtenergiebedarf von 25% des Gesamtenergiebedarfes zugeteilt.

Für jeden Horizont können Zusatzenergievarianten bestimmt werden, die jeweils zu einem nicht ladungserhaltenden Betrieb während des Horizontes führen.

Bei den Zusatzenergievarianten entspricht daher der Ladezustand der Energiespeichervorrichtung am Ende des Horizonts nicht dem Ladezustand am Anfang des Horizonts. Der Ladungszustand kann grösser oder kleiner sein.

Somit wird eine gewisse Variation im Energiespeichersystem erlaubt und somit sind die Varianten nicht unnötig restriktiv.

Die Zusatzenergievarianten können in einem Zusatzenergiebereich liegen, dessen erste Begrenzung ($ZE_1$) dem anteiligen Gesamtenergiebedarf ($aGE_{Hx}$)der zu fahrenden Strecke des Horizonts entspricht. Die zweite Begrenzung ($ZE_2$) entspricht der Summe des anteiligen Gesamtenergiebedarfs ($aGE_{Hx}$) der zu fahrenden Strecke des Horizonts und dem doppelten der Differenz aus dem Energiebedarf des Horizonts ($E_{Hx}$) und dem anteiligen Energiebedarf des Horizonts ($aGE_{Hx}$) liegt.

Dies entspricht den folgenden Formeln für die Begrenzung des Zusatzenergiebereiches:

$$ZE_1 = GE_{Hx}$$

$$ZE_2 = aGE_{Hx} + 2 * (E_{Hx} - aGE_{Hx})$$

Die Zusatzenergievarianten können so festgelegt werden, dass die einzelnen Zusatzenergievarianten jeweils den gleichen Abstand zueinander aufweisen und insbesondere der Abstand jeweils im Bereich von 5% des Zusatzenergiebereiches liegt. Bei einer 5% Schrittweite würden sich daher beispielsweise 18 Zusatzenergievarianten pro Horizont ergeben.

Somit ist ein Bereich gleichmässig abgedeckt.

Eine Gütebewertung der Horizontvarianten und/oder der Zusatzenergievarianten wird durchgeführt, wobei die Gütebewertung zumindest einen der folgenden Faktoren berücksichtigt. Vorhergesagter Treibstoffverbrauch der Gesamtstrecke und/oder Ladestandsvariation des Energiespeichersystems auf der Gesamtstrecke und/oder Über- oder Unterschreiten von Ladestandsgrenzwerten auf der Gesamtstrecke und/oder Abweichung eines tatsächlichen Ladestandes des Energiespeichersystems am Ende der Gesamtstrecke von einem vorhergesagten Ladestand am Beginn der Strecke, wobei die Gütebewertung zum Bestimmen der günstigsten Energieabgaberate verwendet wird.

Nach der Bewertung wird also ein optimaler Wert der Energieabgaberate der Energieerzeugungsvorrichtung ausgegeben, der für den jeweiligen Horizont eingestellt wird.

Die Gütebewertung kann durch folgende Formel durchgeführt werden:

$$J = H_2 + \text{SOC}_{Hub}\lambda_{1+}\Delta SOC_{Ende}\lambda_2 + \Delta SOC_{tief}\lambda_3 + \Delta SOC_{hoch}\lambda_4$$

Wobei

$H_2$ der Kraftstoffverbrauch der jeweiligen Variante,
$\text{SOC}_{hoch}$ Maximalwert des Ladezustandes (SOC),
$\text{SOC}_{tief}$ Minimalwert des Ladezustandes (SOC),
$\text{SOC}_{Hub}$ die Differenz zwischen $\text{SOC}_{Hoch}$ und $\text{SOC}_{tief}$ der jeweiligen Variante,
$\Delta SOC_{Ende}$ die Abweichung des Ladezustandes (SOC) am Ende der Variante
$\Delta SOC_{tief}$ Wert für eine Abweichung von $\text{SOC}_{tief}$ falls vorhanden
$\Delta SOC_{hoch}$ Wert für eine Abweichung von $\text{SOC}_{hoch}$ falls vorhanden $\Lambda_{1-4}$ Gewichtungsfaktoren, die für jede Strecke durch Simulation ermittelt werden

sind.

Die optimale Bedatung der Gewichtungsfaktoren wird in der Simulation und später auf dem Testring ermittelt. Im Endeffekt ist die Wahl abhängig von anwendungspezifischen Größen, also einerseits von der Fahraufgabe und andererseits von den Fahrzeugausstattung, also der Dimensionierung der Antriebskomponenten. Beispiele für die Gewichtungsfaktoren:

$\lambda 1$

standardmäßig = 1.

Für Projekte mit hohem Fokus auf Kraftstoffverbrauch, z. B. bei knapp dimensioniertem Tankinhalt = 1.75. In worst case Szenarien (hohe Beladung, hohe Außentemperatur) = 3.75

Für Projekte mit hohem Fokus auf SOC Betriebsbereich, z. B bei knapp dimensionierter Gesamtkapazität der Traktionsbatterien. = 0.75. In worst case Szenarien (hohe Beladung, hohe Außentemperatur) = 0.55

## $\lambda 2 - \lambda 4$

Grundsätzlich ist eine Abweichung von SOCziel nicht identisch zu gewichten wie ein Unterschreiten von SOCmin bzw. Überschreiten von SOCmax. Daher ist $\lambda 4$ standardmäßig deutlich geringer als $\lambda 2$ und $\lambda 3$. Weiterhin ist $\lambda 2$ höher zu gewichten als $\lambda 3$, da bei Unterschreiten von SOCmin neben der schädigenden Wirkung auf die Komponente Traktionsbatterie noch zusätzlich die Gefahr einer nicht mehr einsatzbereiten Batterie besteht, da keine Energie mehr zur Verfügung steht.

$$\lambda 2 = \text{standardmäßig} = 2$$

$$\lambda 3 = \text{standardmäßig} = 1$$

$$\lambda 4 = \text{standardmäßig} = 0.2$$

Auch hier gilt wieder eine starke Abhängigkeit vom Anwendungsfall. Z. B. kann es erforderlich sein $\lambda 4$ höher zu gewichten (=1) und $\lambda 3$ zu reduzieren (=0.5) falls bei einem Projekt zwingend ein SOCziel erreicht werden muss, z.B. um eine darauffolgende reine Batteriestrecke absolvieren zu können, auch wenn dazu SOCmax überschritten werden muss.

Der geringste Wert für diese Funktion ist die optimale Variante.

Somit ist ein optimaler Betrieb von Energieerzeugungsvorrichtung und Energiespeichersystem möglich.

Das Verfahren wie vorhergehend beschrieben kann nach Durchfahren eines Streckenabschnittes für die übrigen Streckenabschnitte wiederholt werden.

Unvorhersehbare Einflussfaktoren auf den Energieverbrauch werden berücksichtigt, indem nach Durchfahren eines Streckenabschnitts das Verfahren neu gestartet wird und so der tatsächliche SOC am Ende des Streckenabschnitts berücksichtigt werden kann. Für den Rest der Strecke wird also nach jedem durchfahrenen Streckenabschnitt ein neues Fahrprofil ermittelt.

Dies ermöglicht eine Anpassung der Berechnung auf nicht vorhersehbare Faktoren wie beispielsweise Lokführerfahrverhalten oder Wetterbedingungen. Durch diese Anpassung nach jedem durchfahrenen Streckenabschnitt kann weiterhin auch dieses Verfahren angewendet werden, ohne dass die Gesamtstrecke und Fahrzeit im Vornherein bekannt ist.

Zur Lösung der Aufgabe führt weiterhin eine Datenverarbeitungsvorrichtung, die Mittel zur Ausführung des Verfahrens wie vorhergehend beschrieben umfasst.

Zur Lösung der Aufgabe führt weiterhin ein Computerprogrammprodukt umfassend Befehle, die bei der Ausführung des Verfahrens durch ein Computer bewirken, dass der Computer das Verfahren nach einem der Ansprüche 1 bis 9 ausführt.

Zur Lösung der Aufgabe führt weiterhin ein computerlesbares Medium, auf dem das Computerprogrammprodukt wie vorhergehend beschrieben, gespeichert ist.

Zur Lösung der Aufgabe führt weiterhin ein Schienenfahrzeug mit einer Energiespeichervorrichtung, einer Energieerzeugungsvorrichtung und einer Datenverarbeitungsvorrichtung wie vorhergehend beschrieben.

Die Erfindung wird im Folgenden anhand von Figuren weiter beschrieben. Dabei zeigt:

Figur 1: Eine erste Variante der Aufteilung einer zu fahrenden Gesamtstrecke,

Figur 2: eine zweite Variante der Aufteilung einer zu fahrenden Gesamtstrecke,

Figur 3: eine dritte Variante der Aufteilung einer zu fahrenden Gesamtstrecke,

Figur 4: eine vierte Aufteilung der zu fahrenden Gesamtstrecke,

Figur 5: eine fünfte Aufteilung der zu fahrenden Gesamtstrecke,

Figur 6: eine in Horizonte eingeteilte zu fahrende Gesamtstrecke mit Zwischenvarianten der Horizonte,

Figur 7: eine beispielhafte Aufteilung von Horizontvarianten bei sieben Streckenabschnitten,

Figur 8: ein prinzipielles Ablaufdiagramm des Verfahrens,

Figur 9: zeigt eine Kostenmatrix für die Gütefunktion.

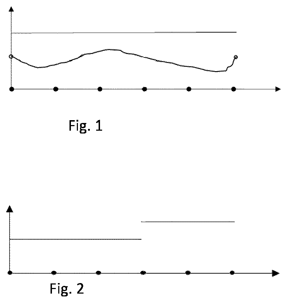

Figur 1 zeigt eine zu fahrende Strecke eines Zuges, wobei die Strecke auf der X-Achse dargestellt ist. Die zu fahrende Strecke ist in Streckenabschnitte eingeteilt, die durch Punkte auf der X-Achse dargestellt sind. In diesem Fall ist die Strecke mit fünf Streckenabschnitten in genau einen Horizont aufgeteilt. Die Leistung der Brennstoffzelle ist mit der konstanten Linie (obere Linie) dargestellt. Die Y-Achse stellt entweder die Energieerzeugungsrate der Energieerzeugungsvorrichtung oder dem Ladezustand der Energiespeichervorrichtung dar. Die Energiespeichervorrichtung hat keinen linearen Ladeverlauf, jedoch sind der Ladezustand am Anfang der zu fahrenden Strecke und am Ende der zu fahrenden Strecke gleich.

Figur 2 zeigt beispielhaft die Aufteilung der zu fahrenden Strecke X in zwei Horizonte, wobei der erste Horizont drei Streckenabschnitte umfasst und der zweite Horizont zwei Streckenabschnitte umfasst. Die energieerzeugungsrate der Energieerzeugungsvorrichtung ist in den beiden dargestellten Horizonten nicht gleich, sondern ist in dem zweiten Horizont grösser als im ersten Horizont. Innerhalb des Horizontes ist die Energieerzeugungsrate jedoch konstant.

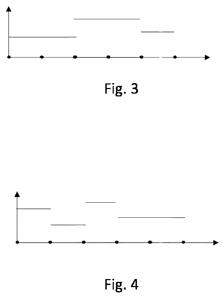

Figur 3 zeigt die Situation aus Figur 1, wobei die zu fahrende Strecke nun in drei Horizonte eingeteilt ist. Der erste Horizont umfasst zwei Streckenabschnitte, der zweite Horizont umfasst ebenfalls zwei Streckenabschnitte und der dritte Horizont umfasst einen Streckenabschnitt. Der Verlauf der Ladezustandskurve (nicht dargestellt) entspricht im Wesentlichen der Ladezustandskurve aus Figur 1, wobei der Ladezustand am Beginn und am Ende jedes Horizontes gleich ist. Die Energieerzeugungsrate der Energieerzeugungsvorrichtung in den jeweiligen Horizonten ist innerhalb des Horizonts konstant, jedoch ändert sie sich von Horizont zu Horizont.

Figur 4 zeigt die gleiche zu fahrende Strecke aus Figur 1 in einer Variante mit vier Horizonten. Der erste Streckenabschnitt entspricht einem Horizont, der zweite Streckenabschnitt entspricht einem Horizont, der dritte Streckenabschnitt entspricht einem Horizont und der letzte Horizont umfasst den vierten und fünften Streckenabschnitt. Der Verlauf der Ladezustandskurve (nicht dargestellt) entspricht im Wesentlichen dem Verlauf aus Figur 1, wobei am Beginn und am Ende jedes Horizonts der Ladezustand der Energiespeichervorrichtung gleich ist.

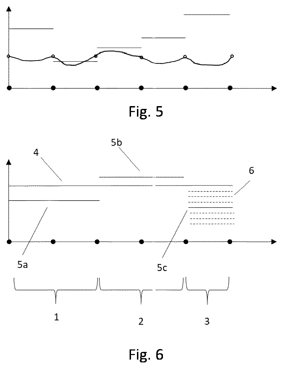

Figur 5 zeigt die maximale Anzahl der Horizonte, wobei die Anzahl der Horizonte der Anzahl der Streckenabschnitte der zu fahrenden Strecke entspricht. Bei jedem Horizont sind Ladezustand am Beginn und am Ende jeweils konstant. Die Energieabgaberate der Energieerzeugungsvorrichtung ist innerhalb der Horizonte konstant und unterscheidet sich jedoch jeweils zum benachbarten Horizont. Dargestellt ist hier weiterhin die Ladezustandskurve.

Figur 6 zeigt die Aufteilung der Strecke ebenfalls in fünf Streckenabschnitte (X-Achse) wobei der erste Horizont 1 zwei Streckenabschnitte umfasst, der zweite Horizont 2 ebenfalls zwei Streckenabschnitte umfasst und der dritte Horizont einen Streckenabschnitt umfasst. Die Gesamtenergierate 4 zum Decken der benötigten Energie für die gesamte Strecke wäre als konstante Energieproduktionsrate dargestellt. Die Energieerzeugungsrate der Energieerzeugungsvorrichtung für den ersten Horizont ist durch die Gerade 5a dargestellt. Die Energieerzeugungsrate für den zweiten Horizont 5b ist ebenfalls durch eine Gerade dargestellt, die jedoch oberhalb der Energieerzeugungsrate des ersten Horizonts liegt. Bei den ersten beiden Horizonten ist der Ladezustand der Energiespeichervorrichtung am Beginn und am Ende des Horizonts konstant. Im dritten Horizont ist durch die Linie 5c ebenfalls die mittlere Energieproduktionsrate der Energieerzeugungsvorrichtung zur Deckung des Energiebedarfs des dritten Horizonts dargestellt. Zusätzlich sind durch die strichlierten Linien 6 die Zusatzenergievarianten dargestellt, bei denen der Ladezustand der Energiespeichervorrichtung am Beginn und am Ende des Horizontes nicht gleich ist.

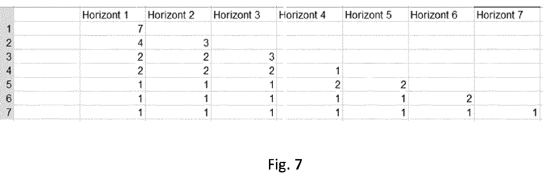

Figur 7 zeigt die beispielhaften Möglichkeiten einer Strecke mit sieben Streckenabschnitten in Horizonte einzuteilen. Beispielsweise hat also ein Horizont sieben Streckenabschnitte und sieben Horizonte weisen jeweils einen Streckenabschnitt auf. Hierbei handelt es sich um die Minimal- und die Maximalanzahl Die Zwischenanzahl sind beispielsweise bei der Bildung von drei Horizonten erster Horizont 1, zweiter Horizont 2 und dritter Horizont 3 Streckenabschnitte. Selbstverständlich sind auch andere Aufteilungen möglich.

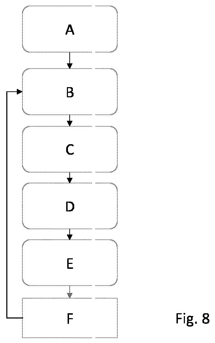

Figur 8 zeigt ein Ablaufdiagramm des Verfahrens, welches bevorzugt computerimplementiert auf einem Schienenfahrzeug mit einer Brennstoffzelle und einer Batterie, durchgeführt wird. Zunächst wird im Schritt A eine zu fahrende Strecke in Abschnitte aufgeteilt. Im Schritt B werden den Streckenabschnitten Horizonte zugeteilt, wobei die Anzahl der Horizonte nicht grösser sein kann als die Anzahl der Streckenabschnitte. Im Schritt C wird für alle Horizonte und deren Horizontvarianten jeweils der Energiebedarf und der Ladezustandsverlauf berechnet. In Schritt D werden dann die Horizontvarianten aller Horizonte anhand der Gütebewertung bewertet. In Schritt E wird dann anhand der Gütebewertung die optimale Variante für Energiespeichervorrichtung und Energieerzeugungsvorrichtung bestimmt. In Schritt F wird dann mit der optimalen bestimmten Energieabgaberate des Energieerzeugungsvorrichtung, also der Brennstoffzelle, das Schienenfahrzeug in dem jeweiligen Streckenabschnitt betrieben. In Schritt F kommt das Schienenfahrzeug am Ende des jeweiligen Streckenabschnitts an, so dass die Berechnung für die nachfolgenden Streckenabschnitte nochmals durchgeführt werden kann.

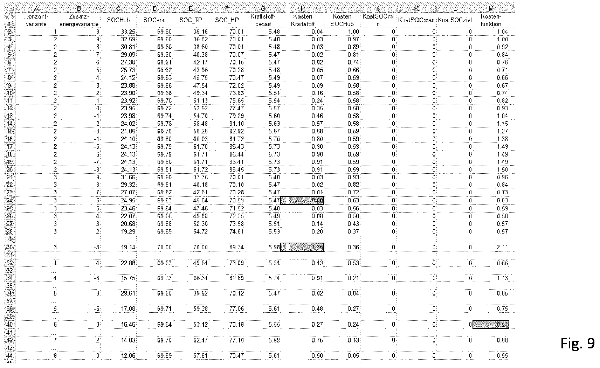

Figur 9 zeigt eine Kostenmatrix für die Gütefunktion. Jede Zeile repräsentiert eine Lösungsvariante, definiert durch die jeweilige Horizontvariante (Spalte A) und die Zusatzenergievariante in Spalte B. Die für dieses Beispiel zugrundeliegende Fahraufgabe besteht aus 8 Streckenabschnitten. Demgemäss existieren 8 Horizontvarianten mit jeweils 18 Zusatzenergievarianten. Der Übersichtlichkeit halber sind in Figur 9 nicht alle Lösungsvarianten dargestellt. In den Spalten C-G sind die Simulationsergebnisse für jede Lösungsvariante abgelegt. In den Spalten H-L die einzelnen Kostenterme gebildet gemäss der Beschreibung auf den Seiten 8-9. In Zeile M schliesslich ist der Gesamtkostenwert für jede Lösungsvariante abgelegt. In Zeile 24 befindet sich die Lösungsvariante mit dem geringsten Kraftstoffbedarf, der Kostenterm ist daher 0. In Zeile 30 befindet sich die Lösungsvariante mit dem höchsten Kraftstoffbedarf, der Kostenterm Kraftstoff ist hier maximal, also 1 multipliziert mit der Gewichtung $\lambda 1$ von 1.75. In Zeile 40 befindet sich die kostengünstigste Lösungsvariante.

## Patentansprüche

1. Verfahren, insbesondere computerimplementiertes Verfahren, zur Optimierung der Fahrstrategie eines Schienenfahrzeuges mit einer Energieerzeugungsvorrichtung und einer Energiespeichervorrichtung umfassend die Schritte

   - Aufteilen einer zu fahrenden Strecke in mehrere Streckenabschnitte,
   - Zusammenfassen der Streckenabschnitte in Horizonte, wobei ein Horizont eine Untermenge zusammenhängender Streckenabschnitte oder eines Streckenabschnitts ist, bei dem die Energieabgaberate der Energieerzeugungsvorrichtung, im Wesentlichen konstant gehalten wird, und die minimale Anzahl der Horizonte eins ist, so dass der Horizont alle Streckenabschnitte enthält, und die maximale Anzahl der Horizonte gleich der Anzahl der Streckenabschnitte ist, so dass jeder Horizont einen einzigen Streckenabschnitt enthält,
   - Ermitteln eines Energiebedarfes des Schienenfahrzeuges während der Horizonte,
   - Bestimmen einer im Wesentlichen konstanten Energieabgaberate der Energieerzeugungsvorrichtung des Schienenfahrzeuges für jeden Horizont, bei dem der Ladezustand der Energiespeichervorrichtung für den Horizont innerhalb eines optimalen Bereiches, liegt,

wobei Horizontvarianten gebildet werden, die eine Minimalanzahl, eine Maximalanzahl und mindestens eine Zwischenanzahl umfasst, wobei die Minimalanzahl der Horizonte eins ist, die Maximalanzahl der Horizonte der Anzahl der Streckenabschnitte entspricht und die Zwischenanzahl zwischen Minimal- und Maximalanzahl liegt, wobei eine Gütebewertung der Horizontvarianten aller Horizonte durchgeführt wird,

wobei die Gütebewertung zumindest einen der folgenden Faktoren berücksichtigt: vorhergesagter Treibstoffverbrauch auf der Gesamtstrecke und/oder Ladestandsvariation des Energiespeichersystems auf der Gesamtstrecke und/oder Über- oder Unterschreiten von Ladestandsgrenzwerten auf der Gesamtstrecke und/oder Abweichung eines tatsächlichen Ladestandes der Energiespeichervorrichtung am Ende der Gesamtstrecke von einem vorhergesagten Ladestand am Beginn der Gesamtstrecke,

wobei die Gütebewertung zum Bestimmen der günstigsten Energieabgaberate verwendet wird,

wobei anhand der Gütebewertung die optimale Variante für Energiespeichervorrichtung und Energieerzeugungsvorrichtung bestimmt wird,

- Betreiben des Schienenfahrzeugs in dem jeweiligen Streckenabschnitt mit der günstigsten bestimmten Energieabgaberate der Energieerzeugungsvorrichtung,

**dadurch gekennzeichnet, dass** die Zwischenanzahl der Anzahl der Streckenabschnitte minus 2 entspricht.

2. Verfahren nach Anspruch 1, **dadurch gekennzeichnet, dass** der optimale Bereich des Ladezustandes 30-70% der Maximalladung, insbesondere 40-60% der Maximalladung, ist.

3. Verfahren nach einem der vorhergehenden Ansprüche, **dadurch gekennzeichnet, dass** ein anteiliger Gesamtenergiebedarf der zu fahrenden Strecke für jeden Horizont bestimmt wird.

4. Verfahren nach einem der vorhergehenden Ansprüche, **dadurch gekennzeichnet, dass** für jeden Horizont Zusatzenergievarianten bestimmt werden, die jeweils zu einem nicht Ladungserhaltenden Betrieb während des Horizontes führen.

5. Verfahren nach Anspruch 4, **dadurch gekennzeichnet, dass** die Zusatzenergievarianten in einem Zusatzenergiebereich liegen, dessen erste Begrenzung dem anteiligen Gesamtenergiebedarf der zu fahrenden Strecke des Horizonts entspricht und dessen zweite Begrenzung der Summe des anteiligen Gesamtenergiebedarf der zu fahrenden Strecke des Horizonts und dem doppelten der Differenz aus dem Energiebedarf des Horizonts und dem anteiligen Gesamtenergiebedarf des Horizonts liegt.

6. Verfahren nach Anspruch 5, **dadurch gekennzeichnet, dass** die Zusatzenergievarianten so festgelegt werden, dass die einzelnen Zusatzenergievarianten jeweils den gleichen Abstand zueinander aufweisen und insbesondere der Abstand jeweils im Bereich von 5% des Zusatzenergiebereiches liegt.

7. Verfahren zur Optimierung der Fahrstrategie eines Schienenfahrzeuges mit einer Energieerzeugungsvorrichtung und einer Energiespeichervorrichtung, **dadurch gekennzeichnet, dass** das Verfahren nach einem der Ansprüche 1 bis 6 nach Durchfahren eines Streckenabschnittes für die übrigen Streckenabschnitte wiederholt wird.

8. Datenverarbeitungsvorrichtung, die Mittel zur Ausführung des Verfahrens nach einem der Ansprüche 1 bis 7 umfasst.

9. Computerprogrammprodukt, umfassend Befehle, die bei der Ausführung des Verfahrens durch einen Computer bewirken, dass der Computer das Verfahren nach einem Ansprüche 1 bis 7 ausführt.

10. Computerlesbares Medium, auf dem das Computerprogrammprodukt nach Anspruch 9 gespeichert ist.

11. Schienenfahrzeug mit einer Energiespeichervorrichtung, einer Energieerzeugungsvorrichtung und einer Datenverarbeitungsvorrichtung nach Anspruch 8.

**Claims**

1. A method, in particular a computer-implemented method, for optimising the driving strategy of a rail vehicle having a power generation device and a power storage device, comprising the steps of

- dividing a route to be travelled into a plurality of route sections,
- grouping the route sections into horizons, wherein a horizon is a subset of contiguous route sections or of one route section, in which the power output rate of the power generation device is kept substantially constant, and the minimum number of horizons is one, such that the horizon contains all route sections, and the maximum number of horizons is equal to the number of route sections, such that each horizon contains a single route section,
- determining an energy demand of the rail vehicle during the horizons,
- determining a substantially constant power output rate of the power generation device of the rail vehicle for each horizon, at which the state of charge of the power storage device for the horizon lies within an optimal range, wherein horizon variants are formed which comprise a minimum number, a maximum number and at least one intermediate number, wherein the minimum number of horizons is one, the maximum number of horizons corresponds to the number of route sections and the intermediate number lies between the minimum and maximum number, wherein a quality assessment of the horizon variants of all horizons is performed, wherein the quality assessment takes into account at least one of the following factors: predicted fuel consumption on the total route and/or state of charge variation of the power storage system on the total route and/or exceeding or falling below state of charge limits on the total route and/or deviation of an actual state of charge of the power storage device at the end of the total route from a predicted state of charge at the beginning of the total route, wherein the quality assessment is used to determine the most favourable power output rate, wherein on the basis of the quality assessment the optimal variant for the power storage device and power generation device is determined,
- operating the rail vehicle in the respective route section with the most favourable determined power output rate of the power generation device, **characterised in that** the intermediate number corresponds to the number of route sections minus 2.

2. Method according to claim 1, **characterised in that** the optimal range of the state of charge is 30-70% of the maximum charge, in particular 40-60% of the maximum charge.

3. Method according to one of the preceding claims, **characterised in that** a proportional total energy demand of the route to be travelled is determined for each horizon.

4. Method according to one of the preceding claims, **characterised in that** for each horizon, additional energy variants are determined, which each lead to a non-charge-sustaining operation during the horizon.

5. Method according to claim 4, **characterised in that** the additional energy variants lie in an additional energy range, the first limit of which corresponds to the proportional total energy demand of the route to be travelled of the horizon and the second limit of which lies at the sum of the proportional total energy demand of the route to be travelled of the horizon and twice the difference between the energy demand of the horizon and the proportional total energy demand of the horizon.

6. Method according to claim 5, **characterised in that** the additional energy variants are defined such that the individual additional energy variants are each equally spaced from one another and in particular the spacing is in each case in the range of 5% of the additional energy range.

7. Method for optimising the driving strategy of a rail vehicle having a power generation device and a power storage device, **characterised in that** the method according to any one of claims 1 to 6 is repeated for the remaining route sections after a route section has been travelled.

8. Data processing apparatus comprising means for carrying out the method according to any one of claims 1 to 7.

9. Computer program product comprising instructions which, when the program is executed by a computer, cause the computer to carry out the method according to any one of claims 1 to 7.

10. Computer-readable medium on which the computer program product according to claim 9 is stored.

11. Rail vehicle with a power storage device, a power generation device and a data processing apparatus according to claim 8.

**Revendications**

1. Procédé, en particulier procédé mis en œuvre par ordinateur, pour l'optimisation de la stratégie de conduite d'un véhicule ferroviaire doté d'un dispositif de génération d'énergie et d'un dispositif de stockage d'énergie, comprenant les étapes consistant à

   - diviser un trajet à parcourir en plusieurs sections de trajet,
   - regrouper les sections de trajet en horizons, un horizon étant un sous-ensemble de sections de trajet contiguës ou d'une section de trajet, dans lequel la puissance de sortie du dispositif de génération d'énergie est maintenue sensiblement constante, et le nombre minimal d'horizons est de un, de sorte que l'horizon contient toutes les sections de trajet, et le nombre maximal d'horizons est égal au nombre de sections de trajet, de sorte que chaque horizon contient une unique section de trajet,
   - déterminer une demande d'énergie du véhicule ferroviaire pendant les horizons,
   - déterminer une puissance de sortie sensiblement constante du dispositif de génération d'énergie du véhicule ferroviaire pour chaque horizon, à laquelle l'état de charge du dispositif de stockage d'énergie pour l'horizon se situe dans une plage optimale,
   dans lequel des variantes d'horizon sont formées, qui comprennent un nombre minimal, un nombre maximal et au moins un nombre intermédiaire, le nombre minimal d'horizons étant de un, le nombre maximal d'horizons correspondant au nombre de sections de trajet et le nombre intermédiaire se situant entre le nombre minimal et le nombre maximal, dans lequel une évaluation de qualité des variantes d'horizon de tous les horizons est effectuée, dans lequel l'évaluation de qualité prend en compte au moins l'un des facteurs suivants : consommation de carburant prédite sur le trajet total et/ou variation de l'état de charge du système de stockage d'énergie sur le trajet total et/ou dépassement ou non-atteinte de valeurs limites d'état de charge sur le trajet total et/ou écart d'un état de charge réel du dispositif de stockage d'énergie à la fin du trajet total par rapport à un état de charge prédit au début du trajet total, dans lequel l'évaluation de qualité est utilisée pour déterminer la puissance de sortie la plus favorable, dans lequel, sur la base de l'évaluation de qualité, la variante optimale pour le dispositif de stockage d'énergie et le dispositif de génération d'énergie est déterminée,
   - faire fonctionner le véhicule ferroviaire dans la section de trajet respective avec la puissance de sortie déterminée la plus favorable du dispositif de génération d'énergie, **caractérisé en ce que** le nombre intermédiaire correspond au nombre de sections de trajet moins 2.

2. Procédé selon la revendication 1, **caractérisé en ce que** la plage optimale de l'état de charge est de 30-70 % de la charge maximale, en particulier de 40-60 % de la charge maximale.

3. Procédé selon l'une des revendications précédentes, **caractérisé en ce qu'**une demande d'énergie totale proportionnelle du trajet à parcourir est déterminée pour chaque horizon.

4. Procédé selon l'une des revendications précédentes, **caractérisé en ce que**, pour chaque horizon, des variantes d'énergie additionnelle sont déterminées, qui conduisent chacune à un fonctionnement sans maintien de la charge pendant l'horizon.

5. Procédé selon la revendication 4, **caractérisé en ce que** les variantes d'énergie additionnelle se situent dans une plage d'énergie additionnelle, dont la première limite correspond à la demande d'énergie totale proportionnelle du trajet à parcourir de l'horizon et dont la seconde limite se situe à la somme de la demande d'énergie totale proportionnelle du trajet à parcourir de l'horizon et du double de la différence entre la demande d'énergie de l'horizon et la demande d'énergie totale proportionnelle de l'horizon.

6. Procédé selon la revendication 5, **caractérisé en ce que** les variantes d'énergie additionnelle sont définies de telle sorte que les variantes d'énergie additionnelle individuelles présentent chacune le même espacement les unes par rapport aux autres et en particulier l'espacement se situe dans chaque cas dans la plage de 5 % de la plage d'énergie additionnelle.

7. Procédé pour l'optimisation de la stratégie de conduite d'un véhicule ferroviaire doté d'un dispositif de génération d'énergie et d'un dispositif de stockage d'énergie, **caractérisé en ce que** le procédé selon l'une des revendications 1 à 6 est répété pour les sections de trajet restantes après avoir parcouru une section de trajet.

8. Dispositif de traitement de données comprenant des moyens pour la mise en œuvre du procédé selon l'une des revendications 1 à 7.

9. Produit-programme d'ordinateur comprenant des instructions qui, lorsque le programme est exécuté par un ordinateur, amènent l'ordinateur à exécuter le procédé selon l'une des revendications 1 à 7.

10. Support lisible par ordinateur sur lequel est stocké le produit-programme d'ordinateur selon la revendication 9.

11. Véhicule ferroviaire avec un dispositif de stockage d'énergie, un dispositif de génération d'énergie et un dispositif de traitement de données selon la revendication 8.

Fig. 1

Fig. 2

Fig. 3

Fig. 4

Fig. 5

Fig. 6

| | Horizont 1 | Horizont 2 | Horizont 3 | Horizont 4 | Horizont 5 | Horizont 6 | Horizont 7 |
|---|---|---|---|---|---|---|---|
| 1 | 7 | | | | | | |
| 2 | 4 | 3 | | | | | |
| 3 | 2 | 2 | 3 | | | | |
| 4 | 2 | 2 | 2 | 1 | | | |
| 5 | 1 | 1 | 1 | 2 | 2 | | |
| 6 | 1 | 1 | 1 | 1 | 1 | 2 | |
| 7 | 1 | 1 | 1 | 1 | 1 | 1 | 1 |

Fig. 7

Fig. 8

| Horizont-variante | Zusatz-energievariante | SOCHub | SOCend | SOC_TP | SOC_HP | Kraftstoff-bedarf | Kosten Kraftstoff | Kosten SOCHub | KostSOCmin | KostSOCmax | KostSOCziel | Kosten-funktion |
|---|---|---|---|---|---|---|---|---|---|---|---|---|
| 1 | 9 | 33.25 | 69.60 | 36.16 | 70.01 | 5.48 | 0.04 | 1.00 | 0 | 0 | 0 | 1.04 |
| 2 | 9 | 32.59 | 69.60 | 36.82 | 70.01 | 5.48 | 0.03 | 0.97 | 0 | 0 | 0 | 1.00 |
| 2 | 8 | 30.81 | 69.60 | 38.60 | 70.01 | 5.48 | 0.03 | 0.89 | 0 | 0 | 0 | 0.92 |
| 2 | 7 | 29.09 | 69.60 | 40.38 | 70.07 | 5.47 | 0.02 | 0.81 | 0 | 0 | 0 | 0.84 |
| 2 | 6 | 27.38 | 69.61 | 42.17 | 70.15 | 5.47 | 0.02 | 0.74 | 0 | 0 | 0 | 0.76 |
| 2 | 5 | 25.73 | 69.62 | 43.96 | 70.26 | 5.48 | 0.05 | 0.66 | 0 | 0 | 0 | 0.71 |
| 2 | 4 | 24.12 | 69.63 | 45.76 | 70.47 | 5.49 | 0.07 | 0.59 | 0 | 0 | 0 | 0.66 |
| 2 | 3 | 23.88 | 69.66 | 47.54 | 72.02 | 5.49 | 0.09 | 0.58 | 0 | 0 | 0 | 0.67 |
| 2 | 2 | 23.90 | 69.68 | 49.34 | 73.83 | 5.51 | 0.16 | 0.58 | 0 | 0 | 0 | 0.74 |
| 2 | 1 | 23.92 | 69.70 | 51.13 | 75.65 | 5.54 | 0.24 | 0.58 | 0 | 0 | 0 | 0.82 |
| 2 | 0 | 23.95 | 69.72 | 52.92 | 77.47 | 5.57 | 0.35 | 0.58 | 0 | 0 | 0 | 0.93 |
| 2 | -1 | 23.98 | 69.74 | 54.70 | 79.29 | 5.60 | 0.46 | 0.58 | 0 | 0 | 0 | 1.04 |
| 2 | -2 | 24.02 | 69.76 | 56.48 | 81.10 | 5.63 | 0.57 | 0.58 | 0 | 0 | 0 | 1.15 |
| 2 | -3 | 24.06 | 69.78 | 58.26 | 82.92 | 5.67 | 0.68 | 0.59 | 0 | 0 | 0 | 1.27 |
| 2 | -4 | 24.10 | 69.80 | 60.03 | 84.72 | 5.70 | 0.80 | 0.59 | 0 | 0 | 0 | 1.38 |
| 2 | -5 | 24.13 | 69.79 | 61.70 | 86.43 | 5.73 | 0.90 | 0.59 | 0 | 0 | 0 | 1.49 |
| 2 | -6 | 24.13 | 69.79 | 61.71 | 86.44 | 5.73 | 0.90 | 0.59 | 0 | 0 | 0 | 1.49 |
| 2 | -7 | 24.13 | 69.80 | 61.71 | 86.44 | 5.73 | 0.91 | 0.59 | 0 | 0 | 0 | 1.49 |
| 2 | -8 | 24.13 | 69.81 | 61.72 | 86.45 | 5.73 | 0.91 | 0.59 | 0 | 0 | 0 | 1.50 |
| 3 | 9 | 31.66 | 69.60 | 37.76 | 70.01 | 5.48 | 0.03 | 0.93 | 0 | 0 | 0 | 0.96 |
| 3 | 8 | 29.32 | 69.61 | 40.18 | 70.10 | 5.47 | 0.02 | 0.82 | 0 | 0 | 0 | 0.84 |
| 3 | 7 | 27.07 | 69.62 | 42.61 | 70.28 | 5.47 | 0.01 | 0.72 | 0 | 0 | 0 | 0.73 |
| 3 | 6 | 24.95 | 69.63 | 45.04 | 70.59 | 5.47 | 0.00 | 0.63 | 0 | 0 | 0 | 0.63 |
| 3 | 5 | 23.46 | 69.64 | 47.46 | 71.52 | 5.48 | 0.03 | 0.56 | 0 | 0 | 0 | 0.59 |
| 3 | 4 | 22.07 | 69.66 | 49.88 | 72.55 | 5.49 | 0.08 | 0.50 | 0 | 0 | 0 | 0.58 |
| 3 | 3 | 20.68 | 69.68 | 52.30 | 73.58 | 5.51 | 0.14 | 0.43 | 0 | 0 | 0 | 0.57 |
| 3 | 2 | 19.29 | 69.69 | 54.72 | 74.61 | 5.53 | 0.20 | 0.37 | 0 | 0 | 0 | 0.57 |
| ... | | | | | | | | | | | | |
| 3 | -8 | 19.14 | 70.00 | 70.00 | 89.74 | 5.98 | 1.75 | 0.36 | 0 | 0 | 0 | 2.11 |
| ... | | | | | | | | | | | | |
| 4 | 4 | 22.88 | 69.63 | 49.61 | 73.09 | 5.51 | 0.13 | 0.53 | 0 | 0 | 0 | 0.66 |
| ... | | | | | | | | | | | | |
| 4 | -6 | 15.75 | 69.73 | 66.34 | 82.69 | 5.74 | 0.91 | 0.21 | 0 | 0 | 0 | 1.13 |
| ... | | | | | | | | | | | | |
| 5 | 8 | 29.61 | 69.60 | 39.92 | 70.12 | 5.47 | 0.02 | 0.84 | 0 | 0 | 0 | 0.85 |
| ... | | | | | | | | | | | | |
| 5 | -6 | 17.08 | 69.71 | 59.38 | 77.06 | 5.61 | 0.48 | 0.27 | 0 | 0 | 0 | 0.75 |
| ... | | | | | | | | | | | | |
| 6 | 3 | 16.46 | 69.64 | 53.12 | 70.18 | 5.55 | 0.27 | 0.24 | 0 | 0 | 0 | 0.51 |
| ... | | | | | | | | | | | | |
| 7 | -2 | 14.03 | 69.70 | 62.47 | 77.10 | 5.69 | 0.75 | 0.13 | 0 | 0 | 0 | 0.88 |
| ... | | | | | | | | | | | | |
| 8 | 0 | 12.06 | 69.69 | 57.81 | 70.47 | 5.61 | 0.50 | 0.05 | 0 | 0 | 0 | 0.55 |

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022008413 A

- DE 10145514 A1